(19) Europäisches Patentamt
European Patent Office
Office européen des brevets

(11) Publication number: 0 083 861
B1

(12) **EUROPEAN PATENT SPECIFICATION**

(45) Date of publication of patent specification: **27.07.88**

(51) Int. Cl.[4]: **G 01 N 27/30**

(21) Application number: **82306841.6**

(22) Date of filing: **21.12.82**

(54) **Electrode and method of producing the same.**

(30) Priority: **12.01.82 JP 3044/82**

(43) Date of publication of application: **20.07.83 Bulletin 83/29**

(45) Publication of the grant of the patent: **27.07.88 Bulletin 88/30**

(84) Designated Contracting States: **BE CH DE FR GB IT LI NL SE**

(56) References cited:
**EP-A-0 068 635**

**JOURNAL OF THE ELECTROCHEMICAL SOCIETY, vol. 125, no. 6, June 1978 V.D. NEFF "Electrochemical oxidation and reduction of thin films of Prussian blue", pages 886-887**

**Chemical Abstracts vol. 94, no. 22, 1 June 1981, Columbus, Ohio, USA D. ELLIS et al. "Electrochromism in the mixed-valence hexacyanides. 1. Voltammetric and spectral studies of the oxidation and reduction of thin films of Prussian blue", page 525, column 1, abstract n**

(73) Proprietor: **SEIKO INSTRUMENTS INC.**
**31-1, Kameido 6-chome Koto-ku**
**Tokyo 136 (JP)**

(72) Inventor: **Itaya, Kingo**
**2-3-12, 1-chome Maruyama**
**Tagajo-shi Miyagi-ken (JP)**
Inventor: **Shibayama, Kimio**
**1-4, 2-chome Yagiyamahoncho**
**Sendai-shi Miyagi-ken (JP)**
Inventor: **Ataka, Tatsuaki c/o K. K. DAINI SEIKOSHA**
**31-1, 6-chome, Kameido**
**Koto-ku Tokyo (JP)**
Inventor: **Iwasa, Koji c/o K. K. DAINI SEIKOSHA**
**31-1, 6-chome Kameido**
**Koto-ku Tokyo (JP)**
Inventor: **Toshima, Shinobu**
**8-8, 1-chome Yagiyamaminami**
**Sendai-shi Miyagi-ken (JP)**

(74) Representative: **Caro, William Egerton et al**
**J. MILLER & CO. Lincoln House 296-302 High Holborn**
**London WC1V 7JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 083 861 B1

(56) References cited:

Chemical Abstracts vol. 85, no. 18, 1 November 1976, Columbus, Ohio, USA F. OPEKAR et al. "Electrochemical oxidation of potassium hexacyanoosmate(II) on a platinum electrode", page 623, column 2, abstract no. 132788c & J. Electroanal. Chem. Interfacial Electrochem., Patent Abstracts of Japan vol. 6, no. 262, 21 December 1982 & JP-A-57-157218

Chemical Abstracts vol. 97, no. 22, 29 November 1982, Columbus, Ohio, USA K.P. RAJAN et al. "Electrochromism in the mixed-valence hexacyanides. 2. Kinetics of the reduction of ruthenium purple and Prussian blue", page 602, column 2, abstract no. 191202c Nature, 137, 1936, 4 pages 577 und 578

## Description

This invention relates to electrodes and method of producing the same.

When discussing Prussion blue and Prussian blue analogs it is convenient to start with Prussian blue itself since it has been well studied in the past. Prussian blue was first synthesised in Berlin in 1704 by Diesbach, a dye craftsman. Since then, because of its deep blue colour, Prussian blue has been widely used as a pigment for printing ink, paint etc. and has other colouring uses. Prussian blue has some interesting properties as well as being the first metal complex to be synthesised.

Prussian blue is believed to include two types of compound, that is, soluble Prussian blue

$$M^{I}Fe(III)[Fe(II)(CN)_6]$$

and insoluble Prussian blue

$$Fe(III)_4[Fe(II)(CN)_6]_3$$

where $M^{I}$ represents a monovalent cation. One of the interesting properties of Prussian blue is that whichever type it is, Fe(II) and Fe(III), which are different in oxidation number, coexist in a common crystal which appears deep blue and which is an intrinsic semiconductor having a negative temperature coefficient of resistivity. Prussian blue is thus a typical mixed valence complex compound. A second interesting property is that whichever type it is, Prussian blue is an insoluble salt having a solubility product $Ksp=10^{-40}$. A third interesting property of Prussian blue is that Everitt's salt which is a reduction product of Prussian blue represented by

$$M_2fl^{I}Fe(II)[Fe(II)(CN)_6]$$

or

$$M_4fl^{I}Fe(II)_4[Fe(II)(CN)_6]_3$$

and Berlin green which is an oxidation product of Prussian blue represented by

$$Fe(III)[Fe(III)(CN)_6]$$

or

$$Fe(III)_4[Fe(III)(CN)_6]_3 . 3X^-$$

where $X^-$ is a monovalent anion have the same crystalline structure as Prussian blue and a lattice constant of 10.2 Angstrom (see, for example, J. F. Keggin and F. D. Miles, Nature, *137*, 577(1936)). This means that the crystalline structure of Prussian blue is not changed by oxidation-reduction reactions.

These interesting properties of Prussian blue are also found in Prussian blue analogs. For example, a compound having Ru(II) substituted for Fe(II) bonded to the carbon atoms of the cyano groups of Prussian blue is also a mixed valence complex compound and is a purple pigment known as Ruthenium purple. Ruthenium purple has the same crystalline structure as the Prussian blue and a lattice constant of 10.4 Angstrom (see, for example, J. F. Keggin and F. D. Miles, Nature, *137*, 577 (1936)). This is also true for the compound having Os(II) substituted for Fe(II), this being a violet pigment.

Prussian blue and its analogs have found few uses other than as pigments for paint and ink because they have been available only in the form of colloidal powder. Prussian blue may be prepared by one of a number of processes, a typical process comprising mixing an aqueous solution containing $Fe^{3+}$ with an aqueous solution containing $[Fe(CN)_6]^{4-}$. In this process, as expected from the solubility product, the reaction produces a powdery precipitate immediately after mixing, and, as a result, neither a single crystal nor a film is obtainable.

In J. Electrochem Soc. Volume 125 No. 6, June 1978, pages 886—887 there is disclosed a platinum electrode having a coloured film of Prussian blue deposited on its surface.

Chemical Abstract No. 85:132788C discusses electrochemical oxidation of potassium hexacyanosinate (II) on a platinum electrode.

EP—A—0068635 relates to an electrochromic display device having two electrodes one of which is coated with an iron (III) hexacyanoferrate (II) salt acting as electrochromic material.

According to one aspect of the present invention there is provided an electrode consisting of a base member at least the surface of which is electrically conductive and a coloured film deposited on the surface of the base member, said coloured film being electrodeposited and composed of a compound of

$$M^{I}M(III)[M'(II)(CN)_6]$$

or

$$M(III)_4[M'(II)(CN)_6]_3$$

where M(III) is Fe(III), Ru(III) or Os(III), M'(II) is Fe(II), Ru(II) or Os(II) and $M^{I}$ is an alkali metal cation with the proviso that said compound does not contain both Fe(III) and Fe(II).

The coloured film may be iron (III) hexacyanoruthenate (ii) salt and is present in an amount effective to exhibit electrochromic activity. Alternatively, the coloured film may be iron (III) hexacyanoosmate (II) salt and is present in an amount effective to exhibit electrochromic activity.

According to another aspect of the present invention, there is provided a method of producing an electrode comprising the steps of: providing an aqueous solution containing M(III) ions, $[M'(III)(CN)_6]^{3-}$ ions and an alkali metal cation $M^{I}$ and where M(II) and M'(III) are Fe(III), Ru(III) or Os(III) with the proviso that said solution does not contain both Fe(III) and $[Fe(III)(CN)_6]^{3-}$ ions; and electrodepositing from said aqueous solution on a base member at least the surface of which is electrically conductive a compound of

$$M^{I}M(III)[M'(II)(CN)_6]$$

or

$$M(III)_4[M'(II)(CN)_6]_3$$

where M(III) and $M^I$ are as defined above, and M'(II) is Fe(II), Ru(II) or Os(II) with the proviso that said compound does not contain both Fe(III) and Fe(II).

The invention is illustrated, merely by way of example, in the accompanying drawings, in which:—

Figure 1 shows cyclic voltammograms of an electrode according to the present invention with a film of Ruthenium purple deposited on a surface thereof and of a transparent electrode without any film on the surface thereof in an aqueous solution of 0.5 m $K_2SO_4$; and

Figure 2 shows the absorption spectra of a film of Ruthenium purple, curves *a* and *b* being the optical absorption spectra at +0.6 V and −2.0 V relative to a saturated calomel electrode respectively.

Example 1

This example illustrates a method of synthesising a film of Ruthenium purple.

Commercial grade of $K_4Ru(CN)_6$ was dissolved in water to form an aqueous solution having a concentration of 10 mM. Oxidation of this solution with $H_2O_2$ resulted in an aqueous solution containing $[Ru(CN)_6]^{3-}$. To this solution was added an equimolar amount of a solution containing $Fe^{3+}$ at a concentration of 10 mM. It is to be noted that no precipitate is formed on mixing the two solutions. A base member consisting of a transparent electrode with an area of 1 $cm^2$ formed on a glass substrate (NESA glass) and a platinum plate electrode about 10 $cm^2$ in area were immersed in this mixed solution, and galvanostatic electrolysis was carried out for about 5 minutes by supplying a current of 10 milliamperes using the base member as the cathode. After completion of the electrolysis, it was found that a purple film had been deposited on the transparent electrode, the film being uniform in thickness and continuous. The purple film was found to be composed of

$$Fe(III)_4[Ru(II)(CN)_6]_3$$

or

$$KFe(III)[Ru(II)(CN)_6]$$

that is an iron (III) hexacyanoruthenate (II) salt.

Example 2

This example demonstrates that the purple film obtained in Example 1 is so-called Ruthenium purple and useful as an electrochromic display material.

The purple film deposited on the transparent electrode in Example 1 constituting a test electrode was immersed in an aqueous solution of 0.5 M $K_2SO_4$. In addition, a counter electrode and a saturated calomel electrode (to be referred to as S.C.E. hereinafter) were placed in this solution to constitute a three electrode electrolytic cell. An absorption spectrophotometer was connected to the cell.

In Figure 1, curve (1) is a cyclic voltammogram of the purple film electrode. This test electrode was purple at a potential of +0.6 V vs. S.C.E. As the potential of the test electrode was swept to the cathodic direction, a reduction current peak appeared at about +0.2 V vs. S.C.E. and then the electrode became transparent at −0.2 V vs. S.C.E. As the potential was swept to the anodic direction again, an oxidation current peak appeared at about +0.2 V and the electrode resumed its original purple colour at +0.6 V.

Figure 2 shows the optical absorption spectrum of this test electrode at +0.6 V and −0.2 V vs. S.C.E. by means of the spectrophotometer connected to the cell. Curve *a* in Figure 2 is the absorption spectrum at +0.6 V vs. S.C.E. showing an absorption peak at about 570 nm which is the same as that of colloidal dispersion of Ruthenium purple.

Curve *b* in Figure 2 is the absorption spectrum at −0.2 V vs. S.C.E. which shows that there is no absorption in the visible region.

When oxidation-reduction reaction was repeated on this test electrode by cyclically changing the applied voltage between +0.6 V and −0.2 V vs. S.C.E., no irreversible change of the test electrode was observed, that is, stable colouring and bleaching was maintained until the oxidation-reduction reaction had been repeated $10^5$ times.

This example demonstrates that the purple film deposited from a solution containing $Fe^{3+}$ and $[Ru(CN)_6]^{3-}$ in Example 1 was Ruthenium purple and is useful as an electrochromic material displaying a purple colour.

Example 3

This example demonstrates that the film electrode of Ruthenium purple used in Examples 1 and 2 is an effective catalyst for the evolution of oxygen and chlorine gases.

As seen from curve (1) in Figure 1, a substantial oxidation current flowed when the voltage was about +1.0 V vs. S.C.E. At the same time evolution of oxygen gas from the electrode surface was observed. Curve (2) in Figure 1 is a cyclic voltammogram of a transparent electrode without any film on the surface thereof and shows that evolution of oxygen gas takes place when the voltage is about 1.4 V vs. S.C.E. Thus an electrode with a film of Ruthenium purple thereon is an effective catalyst for the evolution of oxygen gas.

Evolution of chlorine gas was detected when the voltage was about 0.8 V vs. S.C.E. and when the Ruthenium purple film electrode was immersed in 1 M KCl. This shows that the electrode is also an effective catalyst for the evolution of chlorine gas. Similar results were obtained from a film of Ruthenium purple on platinum and glassy carbon plate electrodes.

Example 4

This example illustrates a method of synthesising a film of a compound having Ru(III) substituted for Fe(III) bonded to the nitrogen

atoms of the cyano groups of Prussian blue.

An aqueous solution containing 10 mM of $RuCl_3$ and an aqueous solution containing 10 mM of $K_3Fe(CN)_6$ were mixed in equimolar amounts to form a brown clear solution. A base member consisting of a transparent electrode 1 $cm^2$ in area formed on a glass substrate and a glassy carbon plate electrode about 10 $cm^2$ in area were immersed in the mixed solution, and galvanostatic electrolysis was carried out for about 5 minutes by supplying a current of 10 milliamperes using the base member as the cathode. After completion of electrolysis, a uniform, continuous, bluish-green film had been deposited on the transparent electrode.

Example 5

This example illustrates a method of synthesising a film of a compound having Os(II) substituted for Fe(II) bonded to the carbon atoms of the cyano groups of Prussian blue, and the usefulness of such a film as an electrochromic material.

By following the same procedures as in Example 1, a base member having a transparent electrode and a platinum counter electrode were immersed in a solution containing $Fe^{3+}$ and $[Os(CN)_6]^{3-}$, and the transparent electrode was cathodically polarised at a current density of 10 $\mu A/cm^2$ to carry out galvanostatic electrolysis for about 5 minutes. A violet film was deposited on the transparent electrode.

The electrode with the violet film thereon was immersed in 1 M KCl and a cyclic voltammogram produced by the same procedure as in Example 2. It was found that a stable oxidation-reduction cycle could be repeated the electrode becoming violet at +0.6 V vs. S.C.E. and transparent at −0.2 vs. S.C.E. This violet film was found to be useful as an electrochromic material and to be composed of

$$KFe(III)[Os(II)(CN)_6]$$

or

$$Fe(III)_4[Os(II)(CN)_6]_3$$

that is an iron (III) hexacyanoosmate (II) salt.

Example 6

This example illustrates a method of synthesising a film of a compound having Os(III) substituted for Fe(III) bonded to the nitrogen atoms of the cyano groups of Prussian blue.

An aqueous solution containing 10 mM of $OsCl_3$ and another aqueous solution containing 10 mM of $K_3Fe(CN)_6$ were mixed in equimolar amounts to form a clear brown solution. A first glassy carbon plate base member or electrode 1 $cm^2$ in area and a second glassy carbon electrode 10 $cm^2$ in area were immersed in this mixed solution, and galvanostatic electrolysis was carried out for about 5 minutes by supplying a current of 10 milliamperes with the first glassy carbon electrode as the cathode. A coloured film was deposited on the surface of the cathode.

An electrode according to the present invention having a film represented by the general formula:

$$M^IM(III)[M'(II)(CN)_6]$$

or

$$M(III)_4[M'(II)(CN)_6]_3$$

where M(III) is Fe(III), Ru(III) or Os(III), M'(II) is Fe(II), Ru(II) or Os(II) and $M^I$ is an alkali metal cation, are of great commercial value and are, for example, useful in electrochromic display devices.

**Claims**

1. An electrode consisting of a base member at least the surface of which is electrically conductive and a coloured film deposited on the surface of the base member, said coloured film being electrodeposited and composed of a compound of

$$M^IM(III)[M'(II)(CN)_6]$$

or

$$M(III)_4[M'(II)(CN)_6]_3$$

where M(III) is Fe(III), Ru(III) or Os(III), M'(II) is Fe(II), Ru(II) or Os(II) and $M^I$ is an alkali metal cation with the proviso that said compound does not contain both Fe(III) and Fe(II).

2. An electrode as claimed in claim 1 characterised in that the coloured film is iron (III) hexacyanoruthenate (II) salt and is present in an amount effective to exhibit electrochromic activity.

3. An electrode as claimed in claim 1 characterised in that the coloured film is iron (III) hexacyanoosmate (II) salt and is present in an amount effective to exhibit electrochromic activity.

4. A method of producing an electrode comprising the steps of: providing an aqueous solution containing M(III) ions, $[M'(III)(CN)_6]^{3-}$ ions and an alkali metal cation $M^I$ and where M(III) and M'(III) are Fe(III), Ru(III) or Os(III) with the proviso that said solution does not contain both Fe(III) and $[Fe(III)(CN)_6]^{3-}$ ions; and electrodepositing from said aqueous solution on a base member at least the surface of which is electrically conductive a compound of

$$M^IM(III)[M'(II)(CN)_6]$$

or

$$M(III)_4[M'(II)(CN)_6]_3$$

where M(III) and $M^I$ are as defined above and M'(II) is Fe(II), Ru(II) or Os(II) with the proviso that said compound does not contain both Fe(III) and Fe(II).

**Patentansprüche**

1. Elektrode aus einem Grundelement dessen Oberflächenbereich wenigstens elektrisch leitend ist, wobei auf der Oberfläche des Grundelementes ein Farbfilm niedergeschlagen ist, welcher Farbfilm galvanisch niedergeschlagen ist und aus einer Verbindung

$$M^IM(III)[M'(II)(CN)_6]$$

oder

$$M(III)_4[M'(II)(CN)_6]_3$$

besteht, wobei M(III) gleich Fe(III), Ru(III) oder Os(III) ist, M'(II) gleich Fe(II), Ru(II) oder Os(II) ist und $M^I$ ein Alkali-Metall-Kation ist, und zwar unter der Bedingung, daß die Verbindung nicht sowohl Fe(III) und Fe(II) enthält.

2. Elektrode nach Anspruch 1, dadurch gekennzeichnet, daß der Farbfilm ein Eisen (III) Hexacyanoruthenat (II) Salz ist und in einem Maße vorliegt, das bewirkt, daß sich eine elektrochrome Aktivität zeigt.

3. Elektrode nach Anspruch 1, dadurch gekennzeichnet, daß der Farbfilm ein Eisen(III) Hexacyanoosmat(II) Salz ist, und in einem Maße vorliegt, das bewirkt, daß sich eine elektrochrome Aktivität zeigt.

4. Verfahren zum Herstellen einer Elektrode, welches die Schritte umfaßt: Bilden einer wässrigen Lösung, die M(III)-Ionen, $[M'(III)(CN)_6]^{3-}$-Ionen und ein Alkalimetallkation $M^I$ enthält, wobei M(III) und M'(III) gleich Fe(III), Ru(III) oder Os(III) sind, unter der Bedingung allerdings, daß die Lösung nicht sowohl Fe(III)-und $[Fe(III)(CN)_6]^{3-}$-Ionen enthält, und galvanisches Niederschlagen einer Verbindung aus

$$M^IM(III)[M'(II)(CN)_6]$$

oder

$$M(III)_4[M'(II)(CN)_6]_3,$$

wobei M(III) und $M^I$ die obige Bedeutung haben und M'(II) gleich Fe(II), Ru(II) oder Os(II) ist, und zwar unter der Bedingung, daß die Verbindung nicht sowohl Fe(III) als auch Fe(II) enthält, aus der wässrigen Lösung auf ein Grundelement, dessen Oberflächenbereich wenigstens elektrisch leitend ist.

**Revendications**

1. Une électrode constituée d'un élément de base dont au moins la surface est conductrice de l'électricité, et d'un film coloré déposé sur la surface de l'élément de base, ledit film coloré étant déposé électrolytiquement et constitué d'un composé

$$M^IM(III)[M'(II)(CN)_6]$$

ou

$$M(III)_4[M'(II)(CN)_6]_3$$

où M(III) est Fe(III), Ru(III) ou Os(III), M'(II) est Fe(II), Ru(II) ou Os(II) et $M^I$ est un cation alcalin, à la condition que ledit composé ne contienne pas à la fois du Fe(III) et du Fe(II).

2. Une électrode selon la revendication 1, caractérisée en ce que le film coloré est du sel hexacyanoruthénate (II) de fer (III) et est présent en quantité efficace pour exhiber une activité électrochrome.

3. Une électrode selon la revendication 1, caractérisée en ce que le film coloré est du sel hexacyanoosmate (II) de fer (III) et est présent en une quantité efficace pour exhiber l'activité électrochrome.

4. Une méthode de production d'une électrode comprenant les étapes suivantes: préparation d'une solution aqueuse contenant des ions M(III) et $[M'(III)(CN)_6]^{3-}$ et un cation alcalin $M^I$ et où M(III) et M'(III) sont Fe(III), Ru(III) ou Os(III), à la condition que ladite solution ne contienne pas à la fois des ions Fe(III) et $[Fe(III)(CN)_6]^{3-}$; et le dépôt électrolytique depuis ladite solution aqueuse sur un élément de base dont au moins la surface est conductrice de l'électricité d'un composé

$$M^IM(III)[M'(II)(CN)_6]$$

ou

$$M(III)_4[M'(II)(CN)_6]_3$$

où M(III) et $M^I$ sont comme défini ci-dessus, et M'(II) est Fe(II), Ru(II) ou Os(II), à la condition que ledit composé ne contienne pas à la fois Fe(III) et Fe(II).

FIG. 1

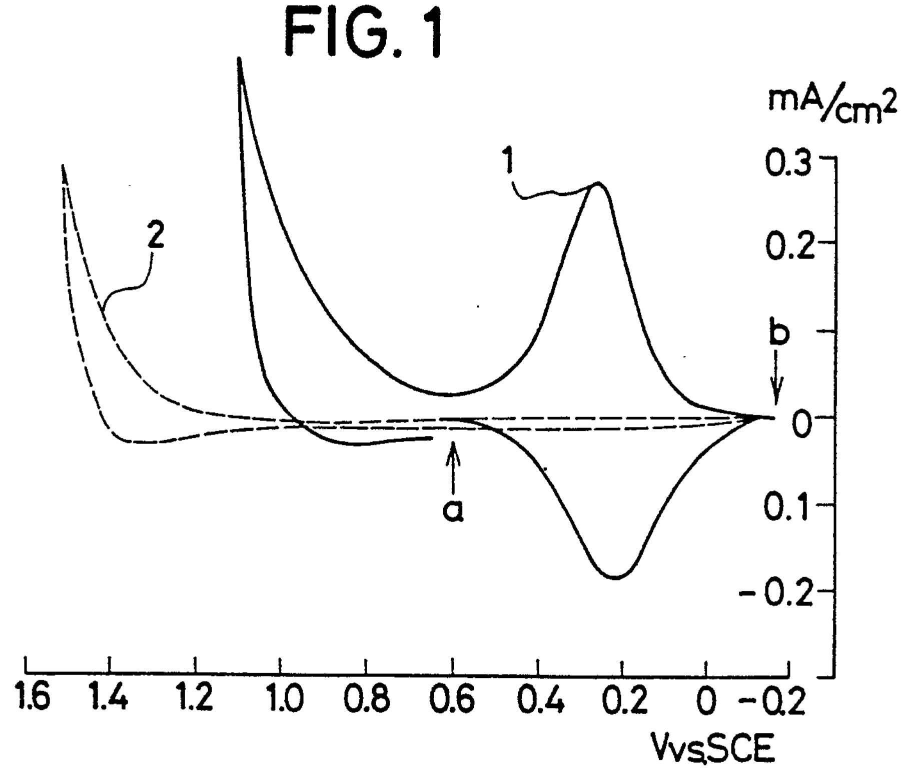
mA/cm2
0.3
0.2
b
0
0.1
-0.2
1
2
a
1.6
1.4
1.2
1.0
0.8
0.6
0.4
0.2
0
-0.2
VvsSCE

FIG. 2

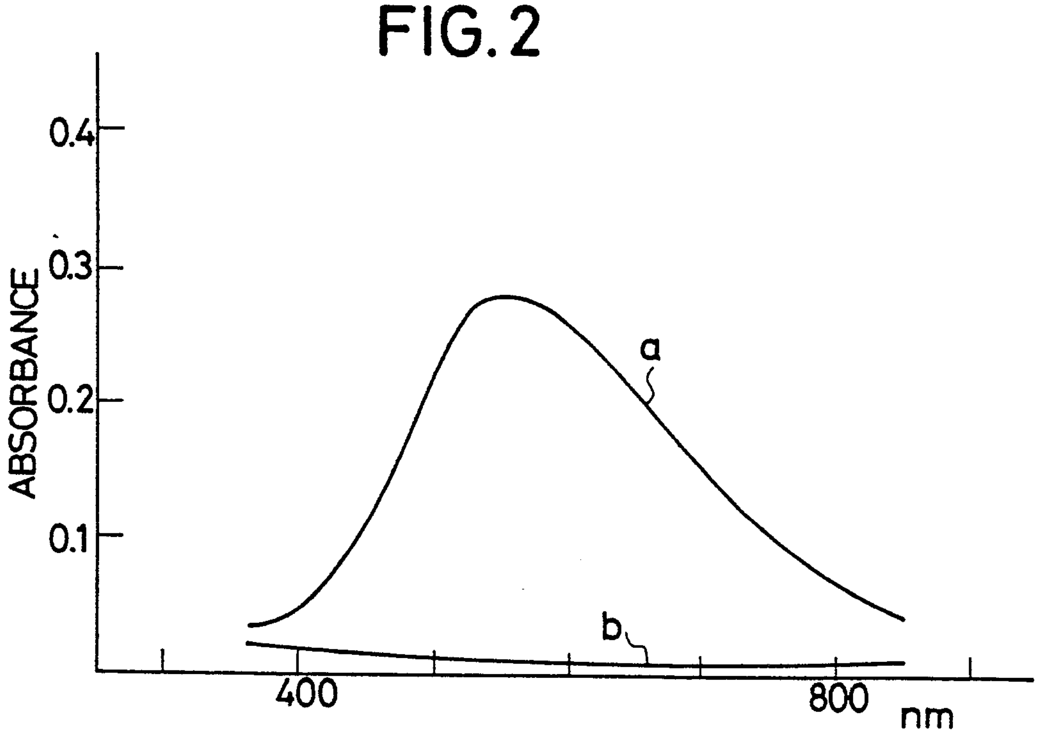
0.4
0.3
0.2
0.1
ABSORBANCE
a
b
400
800
nm